# EUROPÄISCHE PATENTSCHRIFT

(11) **EP 2 683 926 B1**
(45) Veröffentlichungstag und Bekanntmachung des Hinweises auf die Patenterteilung: **20.03.2019**
(21) Anmeldenummer: 13719060.9
(22) Anmeldetag: 19.04.2013
(51) Int. Cl.: F02B 77/04, F02B 69/04, F01M 9/02, F02D 19/02, F02D 19/08, F02M 25/00, F01N 3/36, F02D 41/14, F01N 3/02

(54) **VERFAHREN ZUR EMISSIONSREDUKTION**
METHOD OF EMISSION REDUCTION
PROCÉDÉ DE RÉDUCTION DES ÉMISSIONS

(30) Priorität: 19.04.2012 DE 102012206457
(43) Veröffentlichungstag der Anmeldung: 15.01.2014
(73) Patentinhaber: FaktorPlus Green Technology GmbH, 29221 Celle (DE)
(72) Erfinder: NOLTE, Günter, 29227 Celle (DE); SCHENK, Florian, 29227 Celle (DE)
(74) Vertreter: Hoffmann Eitle
(86) Internationale Anmeldenummer: PCT/EP2013/058191
(87) Internationale Veröffentlichungsnummer: WO 2013/156603

(56) Entgegenhaltungen:
- EP-A1- 0 919 419
- EP-A1- 2 088 306
- DE-A1- 19 746 855
- DE-A1-102010 003 382
- JP-A- 2010 281 239
- US-A1- 2004 227 523
- US-B1- 7 113 127

## Beschreibung

### Technisches Gebiet

Die vorliegende Erfindung betrifft ein Verfahren zur Reduktion von Emissionen eines Motors. Hierbei kann es sich beispielsweise um einen stationären Motor, wie von einem Stromgenerator oder einem Blockheizkraftwerk, oder einen Motor in einem Fahrzeug, beispielsweise PKW, Eisenbahn, Schiff, usw., handeln.

### Stand der Technik

Im Stand der Technik sind Systeme bekannt, bei denen Parameterdaten des Verbrennungskraftmotors erfasst und aufgezeichnet werden. Diese Parameterdaten werden entweder dazu genutzt, den Betriebsverlauf des Verbrennungskraftmotors zu dokumentieren, oder die Laufparameter des Verbrennungskraftmotors zu regeln.

Als druckschriftlicher Stand der Technik ist die DE 197 46 855 A1 bekannt, die auf eine Kolbenbrennkraftmaschine gerichtet ist, bei der die benötigte Kraftstoffmenge in Abhängigkeit von der Lastforderung über eine Motorsteuerung gemessen wird, und ggf. eine zusätzliche Kraftstoffmenge eingespritzt wird, wenn sich der Kolben jeweils bei seinem Expansionshub im Bereich der unteren Totpunktstellung befindet. Es ist die Einführung zusätzlicher Kohlenwasserstoffe für die Abgasnachbehandlung über eine ohnehin vorhandene Einspritzdüse möglich.

Ferner ist die JP 2010/281239 A bzw. DE 10 2010 029 512 A1 bekannt, die Diagnosewerkzeug zeigen, das über eine drahtlose Verbindung bei einem Autohändler mit dem Fahrzeug verbunden wird.

Die US 7,113,127 B1 betrifft ein drahtloses Fahrzeug Monitoring System. Dabei werden Algorithmen zur Berechnung der Fahrzeugemissionen mit einer Mapping-Software verknüpft werden können, um Emissionskennfelder zu erzeugen.

Als weiteres Dokument zeigt die US 2004/227523 A1 den Einsatz eines Mobiltelefons, welches sich mit einer existierenden Schnittstelle eines Fahrzeugs verbindet, um beispielsweise Diagnosedaten anzuzeigen bzw. als Scanwerkzeug zu fungieren.

### Gegenstand der Erfindung

Die vorliegende Erfindung wurde mit dem Ziel durchgeführt, die Emissionen eines Verbrennungskraftmotors zu reduzieren. Dieses Ziel wird durch ein Verfahren gemäß Anspruch 1 erreicht. Weitere bevorzugte Ausführungsformen sind in den abhängigen Ansprüchen aufgeführt. Darüber hinaus wird ein Fahrzeug gemäß Anspruch 6 bereitgestellt, das durch die beanspruchten Merkmale zur Reduktion der ausgestoßenen Emissionen beiträgt.

Insbesondere stellt die vorliegende Erfindung ein Verfahren zur Überwachung und zur Reduktion von Emissionen eines Verbrennungskraftmotors bereit. Dieses Verfahren umfasst die Merkmale des unabhängigen Anspruchs 1.

Erfindungsgemäß werden die erfassten Daten über ein Mobilfunksignal, insbesondere GSM-Signal, an einen Server übertragen. Ferner wird ein Steuersignal zum Einwirken auf den Verbrennungskraftmotor vom Server über ein Mobilfunksignal übertragen, und insbesondere regelt der Server die Einwirkung auf den Verbrennungskraftmotor insbesondere unter Verwendung definierter Arbeitsroutinen. Das Mobilfunksignal ist üblicherweise flächendeckend verfügbar.

Ferner können die zwischengespeicherten Daten zur Überwachung der motorspezifischen Emissionen genutzt werden. Durch diese Möglichkeit können beispielsweise CO2-Emissionen eines Fahrzeuges dokumentiert und zur weiteren Verwendung bereitgestellt werden. Der Betreiber einer Fahrzeugflotte kann somit gegenüber Behörden die tatsächlichen Emissionsdaten ermitteln, die nicht unbedingt mit den Verbrauchsdaten korrelieren und darüber hinaus fahrzeugspezifisch sind. Ein weiterer Gedanke betrifft im nächsten Schritt das Einwirken auf das Emissionsverhalten des spezifischen Verbrennungskraftmotors. Auf diese Weise können die Emissionen des Verbrennungskraftmotors aktiv verändert werden.

In einer Ausführungsform der vorliegenden Erfindung betrifft das genannte Einwirken ein Zugeben eines Kraftstoffkonditionierers und/oder eines Zusatzstoffs, insbesondere Wasserstoff, LPG, Methangas. Dieser wird dem primär bereitgestellten Kraftstoff für den Verbrennungskraftmotor zugegeben. "Primär" deutet in diesem Zusammenhang jedoch nicht auf ein bestimmtes Mengenverhältnis hin. Vielmehr zielt das Zugeben eines Kraftstoffkonditionierers und/oder eines Zusatzstoffs auf eine Gesamtreduktion der Emissionen ab. Diese kann aus bestimmten Charakteristiken des Verbrennungskraftmotors und/oder der konkret vorliegenden Situation durch ein bestimmtes Mischungsverhältnis ergeben.

In bestimmten Ausführungsformen der vorliegenden Erfindung befindet sich der Verbrennungskraftmotor in einem Fahrzeug, oder es handelt sich in einer anderen Zielrichtung um einen stationären Verbrennungskraftmotor. In beiden Varianten kann das erfindungsgemäße Verfahren zur Überwachung und zur Reduktion von Emissionen eines Verbrennungskraftmotors vorteilhaft eingesetzt werden.

Bevorzugt wird ein Neustart des Verbrennungskraftmotors verhindert, wenn erfasst wird, dass das Einwirken auf den Betrieb des Verbrennungskraftmotors nicht möglich ist. Auf diese Weise kann sichergestellt werden, dass ein Einwirken auf den Betrieb des Verbrennungskraftmotors in jedem Fall stattfindet. Der Bediener des Verbrennungskraftmotors, im Falle eines Fahrzeugs somit der Fahrer, wird damit dazu angehalten, das Einwirken im funktionsfähigen Zustand zu halten. Betrifft das Einwirken ein Zugeben eines Kraftstoffkonditionierers und/oder eines Zusatzstoffs, insbesondere Wasserstoff, LPG, Methangas, bedeutet dies beispielsweise, dass der Tank mit diesem Mittel bzw. diesen Mitteln befüllt werden muss, bevor ein Neustart des Verbrennungskraftmotors möglich ist.

Neben dem genannten Verfahren betrifft die vorliegende Erfindung ferner ein Fahrzeug mit einem Verbrennungskraftmotor, einem Sensor zum kontinuierlichen Erfassen leistungsabhängiger Emissionen während des Betriebs des Verbrennungskraftmotors und einer Steuereinrichtung, wobei die Steuereinrichtung die erfassten Daten zwischenspeichert und/oder zum Einwirken auf den Betrieb des Verbrennungskraftmotors aufarbeitet. Zu den vorteilhaften Effekten wird auf die obigen Ausführungen verwiesen.

Bevorzugt ist der Sensor ein CO2-Sensor, ein Partikelsensor, insbesondere Rußpartikelsensor, oder ein NOx-Sensor. Auf diese Weise können am Fahrzeug die aktuell ausgestoßenen Emissionen kontinuierlich erfasst werden.

Die vorliegende Erfindung kann bei verschiedenen Brennungskraftmaschinen zur Anwendung kommen. Dies betrifft zum einen die Ausführung als sogenannte stationäre Verbrennungskraftmaschine, wie bei einem Stromgenerator oder einem Kraftwerk, oder einem in einem Fahrzeug eingesetzter Verbrennungskraftmotor. Ferner kann ein solcher Verbrennungskraftmotor mit flüssigem oder gasförmigem Kraftstoff, oder einer Kombination hiervon, betrieben werden.

In einer ersten Zielrichtung der vorliegenden Erfindung wird der Verbrennungskraftmotor mit einem oder mehreren Sensoren versehen, mit dem oder denen die Emissionen des Verbrennungskraftmotors erfasst werden können. Diese Daten können mit weiteren Randparametern kombiniert werden.

Als einer der infrage kommenden Sensoren wird ein Co₂-Sensor verwendet, dessen Messung auf einem speziellen Differenzsignalverfahren beruht. Solche Sensoren weisen eine relativ geringe Störempfindlichkeit auf. Ferner kann mit einem solchen Sensor eine feinpartikuläre Verschmutzung (sogenannter Feinstaub) erfasst werden, die insbesondere im Bereich von Verbrennungskraftmaschinen, die mit Diesel- oder Schwerkraftstoffen betrieben werden, auftreten. Auch kann der genannte Sensortyp wartungsfrei betrieben werden, und eine kontinuierliche Messdatenerfassung sicherstellen.

In einer anderen Ausführungsform kann der genannte Sensor einen Rußpartikel-Sensor umfassen, dessen Messprinzip auf der direkten Detektion von im Abgas enthaltenen Kohlenstoffpartikeln beruht. Der Sensor weist gegen andere, nicht leitende Stoffe keine Querempfindlichkeit auf. Mit einem solchen Rußpartikel-Sensor können insbesondere flüssige, kohlenstoffhaltige Kraftstoffe hinsichtlich kohlenstoffhaltigen Feinstaubs überwacht werden.

Ein weiterer möglicher Sensortyp betrifft einen NOx-Sensor, der auf dem Messprinzip der Leitfähigkeitsänderung von leicht oxidierbaren und reduzierbaren Gasen basiert. Ein solcher Sensortyp kann auch bei sehr hohen Temperaturbereichen eine gleichbleibende Messtoleranz sicherstellen.

Alle genannten Sensoren besitzen eine Datenschnittstelle, über die ein Sensorsignal einerseits direkt für ein Steuersignal, und andererseits als ein Messwertsignal genutzt werden kann.

Falls die Nutzung des Sensorsignals als Steuersignal vorgesehen ist, kann mit diesem eine sogenannte On-Board-Dosierung durchgeführt werden. Dabei wird zu einem Basiskraftstoff (beispielsweise flüssiger Kraftstoff) ein emissionsmindernder Kraftstoffkonditionierer hinzugefügt. Zum eingesetzten Verfahren wird insbesondere auf die WO 2011/120935 A1 verwiesen, in der unter anderem eine gesteuerte Beimischung eines emissionsmindernden Krafstoffkonditionierers erläutert wird.

Neben einem emissionsmindernden Krafstoffkonditionierer kann auch ein emissionsmindernder Zusatzstoff, insbesondere Wasserstoff, dem Kraftstoff beigefügt werden. Auch diese Beimischung kann über die durch den Sensor erhobenen Messdaten gesteuert werden.

Neben der sogenannten On-Board-Dosierung ist die im Zusammenhang mit der vorliegenden Erfindung verwendete Steuereinrichtung dazu eingerichtet, die durch den Sensor erfassten Messdaten an einen externen Server über GSM oder ein anderes Mobilfunksignal zu übermitteln, sodass vom externen Server die übermittelten Messergebnisse ausgewertet werden. Ausgehend hiervon kann ggf. unter Einwirkung eines Nutzers ein Steuersignal an die im Zusammenhang mit dem Verbrennungskraftmotor vorgesehene Steuereinrichtung übermittelt werden, wodurch wiederum auf die Versorgung mit einem emissionsmindernden Kraftstoffkonditionierer oder die Versorgung mit einem emissionsmindernden Zusatzstoff eingewirkt wird.

Die über GSM übertragenen Messdaten können für ein Emissions- und Parametermonitoring genutzt werden, das gleichzeitig die Überwachung des tatsächlichen Verbrauchs beeinhaltet. Rein beispielhaft sei darauf verwiesen, dass auf diesem Wege die Entwendung von Kraftstoff und/oder die Beimischung von leistungsreduzierenden Komponenten zum Ausgleich von entwendetem Kraftstoff (beispielsweise Wasser) überwacht werden kann. Denn Ziel der Messung ist im Gegensatz zur Verbrauchsmessung die Bewertung der Emission.

Im Zusammenhang mit der On-Board-Dosierung bilden der Kraftstoffverbrauch, die Speicherkapazität des Kraftstofftanks, die Einsatzschwere und der Einsatzzweck die Grundlage für die Ausführung. In diesem Zusammenhang gelten als weitere Parameter der Kraftstoffverbrauch pro Arbeitsleistung sowie die Betriebsparameter der Verbrennungskraftmotors (Drehzahl, Drehmoment, Turbodruck, Geschwindigkeit), die erfassten Emissionsparameter und weitere Rahmen- und Randparameter.

Erfindungsgemäß werden die genannten Parameter, insbesondere die Emissionparameter, kontinuierlich erfasst. Diese werden in die Steuereinrichtung übertragen, und können beispielsweise über GSM an den externen Server übermittelt werden.

Falls ein Betreiber eines Verbrennungskraftmotors nicht die sogenannte On-Board-Dosierung nutzt, besteht zumindest die Möglichkeit, das Emissionsverhalten des spezifischen Verbrennungskraftmotors (und somit auch einer größeren Anzahl von Verbrennungskraftmotoren) online zu verfolgen und zumindest nachhaltig zu dokumentieren. Der Betreiber kann dann den Bediener des Verbrennungskraftmotors, also beispielsweise den Fahrer, zu emissionsminderndem Verhalten schulen, und er kann die Einsätze und Arbeitsaufgaben des Verbrennungskraftmotors emissionsmindernd planen und steuern.

Ein weiterer Aspekt der vorliegenden Erfindung ist eine sogenannte Abschaltroutine. Sollte aus einem bestimmten Grund die Versorgung mit einem Kraftstoff und/oder einem Kraftstoffkonditionierer/einem Zusatzstoff nicht mehr gewährleistet sein, so kann die genannte Abschaltroutine zu einem Stillstand des Verbrennungskraftmotors und somit zur Vermeidung unkontrollierter Abgasemissionen führen. Im Bereich der Fahrzeuge ist hierbei jedoch eine Abschaltroutine vorgesehen, die ggf. einen Wiederstart des Verbrennungskraftmotors verhindert, um somit den Bediener zum Nachfüllen des Kraftstoffkonditionierers/ des Zusatzstoffs zu bewegen.

Die auf dem externen Server verfügbaren Daten können über einen Internetbrowser eingesehen werden. Zwar ist es in einer Zielrichtung der vorliegenden Erfindung vorgesehen, dass die auf dem externen Server abgelegten Daten nicht durch Dritte manipuliert werden können und somit die überwachten Vorgänge dokumentieren. Allerdings ist es in einer weiteren Zielrichtung denkbar, eine Manipulation der abgelegten Daten ggf. unter bestimmten Voraussetzungen zu gestatten.

Ferner werden die Daten im Bedarfsfall mit GSM-Daten kombiniert, um somit einen kartenbasierten Emissionsverlauf zu dokumentieren. Die Übersicht der Daten kann in einer bestimmten Ausführungsform folgende Parameter umfassen: momentane Geschwindigkeit des Fahrzeugs, Kraftstoffverbrauch, CO₂-Emission, Außentemperatur, Tankfüllstand, usw. Zur Dokumentation werden die Tagesdaten zusammengefasst und übersichtlich dargestellt. Auf Grundlage dieser Dokumentation ist es möglich, verschiedene Fahrzeuge, Strecken, Geschwindigkeit und Datum/Uhrzeit zu vergleichen. Ferner können Statusberichte über bestimmte Zeitintervalle, beispielsweise Monatsbericht, Wochenbericht und Tagesbericht, angezeigt, und ein Fahrzeugfuhrpark überwacht werden. Auch kann über die erfassten Emissionsdaten spezifisch auf ein bestimmtes Fahrzeug eingegangen werden. Denn es hat sich gezeigt, dass gerade bei älteren Fahrzeugen die Beeinflussung der Emission des Verbrennungskraftmotors von den ursprünglich angegebenen Herstellerangaben deutlich abweichen kann.

## Patentansprüche

1. Verfahren zur Überwachung und zur Reduktion von Emissionen eines Verbrennungskraftmotors, mit den Schritten:
Kontinuierliches Erfassen leistungsabhängiger Emissionen während des Betriebs des Verbrennungskraftmotors, und
Ausgeben der erfassten Emissionsdaten an eine Datenschnittstelle, und
Zwischenspeichern der ausgegebenen Emissionsdaten und Einwirken auf den Betrieb des Verbrennungskraftmotors während des Betriebs, wobei
die erfassten Daten über ein Mobilfunksignal, insbesondere ein GSM-Signal, an einen Server übertragen werden und
ein Steuersignal zum Einwirken auf den Verbrennungskraftmotor vom Server über ein Mobilfunksignal übertragen wird.
wobei das Einwirken ein Zugeben eines Kraftstoffkonditionierers und/oder eines Zusatzstoffs, insbesondere Wasserstoff, LPG, Methangas, betrifft.

2. Verfahren gemäß Anspruch 1, bei dem der Server die Einwirkung auf den Verbrennungskraftmotor insbesondere unter Verwendung definierter Arbeitsroutinen regelt.

3. Verfahren gemäß einem der vorangegangenen Ansprüche, bei dem sich der Verbrennungskraftmotor in einem Fahrzeug befindet, oder ein stationärer Verbrennungskraftmotor ist.

4. Verfahren gemäß einem der vorangegangenen Ansprüche, bei dem ein Neustart des Verbrennungskraftmotors verhindert wird, wenn erfasst wird, dass das Einwirken auf den Betrieb des Verbrennungskraftmotors nicht möglich ist.

5. Fahrzeug mit einem Verbrennungskraftmotor, einem Sensor zum kontinuierlichen Erfassen leistungsabhängiger Emissionen während des Betriebs des Verbrennungskraftmotors und einer Steuereinrichtung,
wobei die Steuereinrichtung die erfassten Daten zwischenspeichert und/oder zum Einwirken auf den Betrieb des Verbrennungskraftmotors aufarbeitet,
wobei die Steuereinrichtung eingerichtet ist, die erfassten Daten über ein Mobilfunksignal, insbesondere ein GSM-Signal, an einen Server zu übertragen, wobei
ein Steuersignal zum Einwirken auf den Verbrennungskraftmotor vom Server über ein Mobilfunksignal an die Steuereinrichtung übertragen werden kann,
wobei das Fahrzeug eingerichtet ist, durch Zugeben eines Kraftstoffkonditionierers und/oder eines Zusatzstoffs, insbesondere Wasserstoff, LPG, Methangas, auf den Betrieb des Verbrennungsmotors einzuwirken.

6. Fahrzeug gemäß Anspruch 5, bei dem der Sensor ein CO2-Sensor, ein Partikelsensor, insbesondere Rußpartikelsensor, oder ein NOx-Sensor ist.

## Claims

1. Method of monitoring and reducing emissions from an internal combustion engine, having the following steps:
continuous sensing of output-dependent emissions during the operation of the internal combustion engine, and
delivery of the sensed emission data to a data interface, and
buffer-storage of the delivered emission data and action on the operation of the internal combustion engine during said operation, wherein
the sensed data is transmitted to a server by means of a mobile communications signal, and in particular a GSM signal, and
a control signal to act on the internal combustion engine is transmitted from the server by means of a mobile communications signal, and
wherein the action relates to the infeed of a fuel conditioner and/or of an additive and in particular hydrogen, LPG, methane gas.

2. Method according to claim 1, wherein the server controls the action on the internal combustion engine in particular by using defined operating routines.

3. Method according to one of the preceding claims, wherein the internal combustion engine is situated in a vehicle or is a stationary internal combustion engine.

4. Method according to one of the preceding claims, wherein a restart of the internal combustion engine is prevented if it is sensed that the action on the operation of the internal combustion engine is not possible.

5. Vehicle having an internal combustion engine, a sensor for the continuous sensing of output-dependent emissions during the operation of the internal combustion engine, and a control means, the control means buffer-storing the sensed data and/or processing it for action on the operation of the internal combustion engine,
wherein the control means is adapted to transmit the sensed data to a server by means of a mobile communications signal, and in particular a GSM signal,
a control signal to act on the internal combustion engine being able to be transmitted from the server to the control means by means of a mobile communications signal, and
the vehicle being adapted to act on the operation of the internal combustion engine by the infeed of a fuel conditioner and/or an additive, and in particular hydrogen, LPG, methane gas.

6. Vehicle according to claim 5, wherein the sensor is a CO2 sensor, a particle sensor and in particular a soot particle sensor, or a NOx sensor.

## Revendications

1. Procédé de surveillance et de réduction d'émissions d'un moteur à combustion interne, comprenant les étapes consistant à :
détecter en continu des émissions dépendant de la puissance pendant le fonctionnement du moteur à combustion interne, et
délivrer en sortie des données d'émission détectées sur une interface de données, et
mémoriser temporairement les données d'émission sorties et agir sur le fonctionnement du moteur à combustion interne pendant le fonctionnement, dans lequel
les données détectées sont transmises par un signal radio mobile, en particulier un signal GSM, à un serveur et
un signal de commande est transmis pour agir sur le moteur à combustion interne du serveur par un signal radio mobile,
dans lequel l'action concerne un ajout d'un conditionneur de carburant et/ou additif, en particulier de l'hydrogène, du GPL, du méthane.

2. Procédé selon la revendication 1, dans lequel le serveur régule l'action sur le moteur à combustion interne en particulier en utilisant des routines de travail définies.

3. Procédé selon l'une quelconque des revendications précédentes, dans lequel le moteur à combustion interne se trouve dans un véhicule, ou est un moteur à combustion interne stationnaire.

4. Procédé selon l'une quelconque des revendications précédentes, dans lequel un redémarrage du moteur à combustion interne est empêché lorsqu'il est détecté que l'action sur le fonctionnement du moteur à combustion interne n'est pas possible.

5. Véhicule avec un moteur à combustion interne, un capteur pour la détection continue d'émissions dépendant de la puissance pendant le fonctionnement du moteur à combustion interne et un dispositif de commande,
dans lequel le dispositif de commande mémorise temporairement les données détectées et/ou les traite pour agir sur le fonctionnement du moteur à combustion interne,
dans lequel le dispositif de commande est aménagé afin de transmettre les données détectées par un signal radio mobile, en particulier un signal GSM, à un serveur, dans lequel
un signal de commande peut être transmis pour agir sur le moteur à combustion interne depuis un serveur par un signal radio mobile au dispositif de commande,
dans lequel le véhicule est aménagé afin d'agir par ajout d'un conditionneur de carburant et/ou d'un additif, en particulier de l'hydrogène, du GPL, du méthane, sur le fonctionnement du moteur à combustion.

6. Véhicule selon la revendication 5, dans lequel le capteur est un capteur de CO₂, un capteur de particules, en particulier un capteur de particules de suie, ou un capteur de NOx.
